# EUROPÄISCHE PATENTSCHRIFT

(11) **EP 4 384 342 B1**
(45) Veröffentlichungstag und Bekanntmachung des Hinweises auf die Patenterteilung: **05.08.2026**
(21) Anmeldenummer: 22730303.9
(22) Anmeldetag: 13.06.2022
(51) Int. Cl.: B23P 19/06, B21D 39/03, B21J 15/02, F16B 5/04, F16B 37/06, B21J 15/10, B21D 37/16, B21K 25/00, B23P 19/04, B21J 15/08

(54) **FÜGEWERKZEUGEINHEIT UND WERKZEUGZANGE**
JOINING TOOL UNIT, AND TOOL GRIPPER
UNITÉ D'OUTIL DE RACCORDEMENT ET DISPOSITIF DE PRÉHENSION D'OUTIL

(30) Priorität: 13.08.2021 DE 102021121086
(43) Veröffentlichungstag der Anmeldung: 19.06.2024
(73) Patentinhaber: TOX PRESSOTECHNIK GmbH & Co. KG, 88250 Weingarten (DE); Alpha Laser GmbH, 82178 Puchheim (DE)
(72) Erfinder: BADENT, Michael, 88250 Weingarten (DE); PFEIFFER, Wolfgang, 88709 Hagnau am Bodensee (DE); SOLLNER, Juergen, 88289 Waldburg (DE)
(74) Vertreter: RavensPAT Patentanwälte Partnerschaft mbB
(86) Internationale Anmeldenummer: PCT/EP2022/065974
(87) Internationale Veröffentlichungsnummer: WO 2023/016680

(56) Entgegenhaltungen:
- CN-U- 205 599 858
- DE-A1- 102018 202 140
- US-A1- 2003 167 621
- US-A1- 2018 250 734
- US-A1- 2021 178 457

## Beschreibung

### Stand der Technik

Es sind bereits Fügewerkzeugeinheiten bei denen ein Werkzeug der Fügewerkzeugeinheit, insbesondere Stempel oder Matrize, mittels eines Mediums auf Beschädigungen überprüft werden, bekannt. Weiter sind auch Fügewerkzeugeinheiten bekannt, welche ein Lichtleitungssystem aufweisen, wobei das Lichtleitungssystem dazu ausgebildet ist, einen Lichtstrahl eines Lichts in Richtung einer Fügestelle des Werkstücks zu leiten. Somit können vorteilhafterweise Werkstücke gefügt werden, welche eine hohe Härte aufweisen.

Bei den bisher bekannten Fügewerkzeugeinheiten ist es nachteilig, dass aufgrund des Lasereinsatzes ein Strahlungsschutz von Mitarbeitern gewährleistet werden muss, welche mit der Fügewerkzeugeinheit arbeiten oder sich im Bereich der Fügewerkzeugarbeit aufhalten können. Bei der bekannten Fügewerkzeugeinheit wird hierzu die komplette Fügewerkzeugeinheit mit einer Umhausung versehen, welche für Licht des Laserstrahls lichtdicht ausgebildet ist. Hierdurch ist die bekannte Fügewerkzeugeinheit vergleichsweise teuer und aufwendig ausgebildet, insbesondere für automatisierte Prozesse.

Zum Stand der Technik wird die US 2028/0250734 A1 genannt.

### Aufgabe und Vorteile der Erfindung

Aufgabe der vorliegenden Erfindung ist es, eine verbesserte Fügewerkzeugeinheit bereitzustellen. Insbesondere liegt der Erfindung die Aufgabe zugrunde eine verbesserte Fügewerkzeugeinheit bereitzustellen, mittels welcher eine Fügestelle an einem harten Werkstück sicher erzeugt werden kann.

Diese Aufgabe wird durch die unabhängigen Ansprüche gelöst.

In den abhängigen Ansprüchen sind zweckmäßige und vorteilhafte Varianten der Erfindung aufgezeigt.

Die Erfindung geht aus von einer Fügewerkzeugeinheit mit einen Niederhalter, mit einem bewegbaren Werkzeug und ein Werkzeuggegenelement, wobei der Niederhalter mit dem bewegbaren Werkzeug und das Werkzeuggegenelement sich gegenüberliegend vorhanden sind, wobei ein Werkstück im angeordneten Zustand zwischen dem Niederhalter und dem Werkzeuggegenelement positionierbar ist, wobei das bewegbare Werkzeug und das Werkzeuggegenelement zur Ausbildung einer Fügeverbindung zusammenwirken, wobei ein Lichtleitungssystem an dem Niederhalter ausgebildet ist, wobei das Lichtleitungssystem dazu ausgebildet ist, einen Lichtstrahl eines Lichts in Richtung einer Fügestelle des Werkstücks zu leiten, wenn das Werkstück an der Fügewerkzeugeinheit angeordnet ist.

Beispielsweise umfasst ein Werkstück zwei oder mehr Werkstückteile, die beispielsweise schichtförmig bzw. aufeinander liegend angeordnet sind. Vorteilhafterweise sind zwischen dem bewegbaren Werkzeug und dem Werkzeuggegenelement zwei oder mehr Werkstückteile anordenbar, die durch die Fügewerkzeugeinheit in einem Fügevorgang mittels einer Fügeverbindung miteinander verbunden werden. Die Werkstückteile, die zwischen dem bewegbaren Werkzeug und dem Werkzeuggegenelement angeordnet sind, können aus unterschiedlichen Materialien ausgebildet sein. Beispielsweise können die Werkstückteile unterschiedliche Metallzusammensetzungen oder unterschiedliche Härten aufweisen. Bevorzugterweise ist das Werkstückteil, an welchem das bewegbare Werkzeug bei einem Fügevorgang anliegt, härter und/oder spröder als das weitere Werkstückteil. Denkbar ist, dass das Werkstück aus genau einem Werkstückteil besteht. Beispielsweise wird mit der Fügewerkzeugeinheit in einem Fügevorgang am Werkstück ein Funktionselement gesetzt. Beispielsweise wird in einem Fügevorgang am einzigen bzw. genau einen Werkstückteil ein Funktionselement gesetzt.

Beispielsweise ist die Fügewerkzeugeinheit derart ausgebildet, dass das Werkstückteil, an welchem das bewegbare Werkzeug angreift, durch ein Licht erwärmbar ist. Aufgrund der Möglichkeit einer Erwärmung des zu fügenden Werkstücks durch die Fügewerkzeugeinheit ist es vorteilhafterweise möglich, eine Fügeverbindung zwischen einem harten und/oder spröder Werkstückteil und einem Werkstückteil aus einem weicheren Material herzustellen. Aufgrund der Möglichkeit einer Erwärmung des zu fügenden Werkstücks durch die Fügewerkzeugeinheit ist außerdem eine Verbesserung bereits möglicher bzw. heute bekannter Verbindungsanwendungen realisierbar.

Die Fügewerkzeugeinheit ist vorteilhafterweise zum Setzen eines Funktionselements zum Beispiel zum Setzen einer Stanzmutter, einer Nietmutter, einer Einpressmutter, eines Bolzens, eines Schraubelements am Werkstück und/oder zum Clinchen bzw. Durchsetzfügen und/oder zum Setzen eines Niets wie z.B. einem Clinchniet, Vollstanzniet oder einem Halbhohlstanzniet ausgebildet. Ein Funktionselement ist mit der Fügewerkzeugeinheit z.B. in das Werkstück einnietbar, einpressbar, einstanzbar oder einclinchbar.

Mit der Fügewerkzeugeinheit sind, z.B. mehrere Werkstückteile miteinander verbindbar, zum Beispiel mit einem Verbindungselement wie einem Niet oder ohne ein Verbindungselement z.B. durch einen Clinchvorgang. Mit der Fügewerkzeugeinheit ist es möglich, an einem Werkstück, das zum Beispiel aus genau einem Werkstückteil besteht, das Funktionselement zu setzen.

Der Niederhalter berührt vorzugsweise zumindest beim Fügevorgang die betreffende Oberfläche des Werkstücks. In der Regel ist die vom Niederhalter kontaktierte Oberfläche des Werkstücks vorteilhafterweise eben und flach ausgebildet. Beispielsweise ist eine dem Werkzeuggegenelement zugewandte Seite des Niederhalters, wie eine Stirnseite des Niederhalters, die in Anlage am Werkstück kommt bei angeordnetem Werkstück, ebenfalls eben und flächig gestaltet. Die Niederhalter-Stirnseite besteht bevorzugt aus einem mechanisch vergleichsweise widerstandsfähigen bzw. verformungsstabilen Material, wie z.B. einem Hartmetall bzw. einem Hartstahlmaterial.

Der Niederhalter kann auch eine Abstreiferfunktion aufweisen. Beispielsweise wird das bewegbare Werkzeug nach Beendigung der Herstellung der Fügeverbindung relativ zum Werkzeuggegenelement vom Werkstück weg bewegt. Hierbei ist es denkbar, dass das Werkstück am bewegbaren Werkzeug haftenbleibt, wobei der Niederhalter in diesem Fall vorteilhafterweise relativ zum Werkzeuggegenelement in seiner am Werkstück anstehenden Position verbleibt, so dass das Werkstück aufgrund seines zwischen dem Niederhalter und dem Werkzeuggegenelement geklemmten Zustands positionsfest verbleibt und damit vom bewegbaren Werkzeug abgestreift wird.

Vorstellbar ist auch, dass sowohl das bewegbare Werkzeug, als auch das Werkzeuggegenelement eine zeitgleiche Bewegung weg vom Werkstück oder zum Werkstück hin ausführen. Vorteilhafterweise ist das Werkstück in diesem Fall durch ein separates Halteelement zwischen dem bewegbaren Werkzeug und dem Werkzeuggegenelement positioniert.

Der Niederhalter kann alternativ so ausgebildet sein, alleinig als Strahlabschirmung und/oder alleinig zur Leitung des Lichtstrahls zu dienen. Der Lichtstrahl wird vorzugsweise durch eine Lichtquelle erzeugt, wobei beispielsweise die Lichtquelle als ein Laser, insbesondere als ein Festkörper-, Gas- oder Flüssigkeitslaser, ausgebildet ist. Denkbar ist, dass der Laser in einem gepulsten und/oder in einem kontinuierlichen Laserbetrieb betrieben werden kann. Weiter kann das Licht des Lichtstrahls auch im sichtbaren, UV- und/oder IR-Bereich liegen. Vorteilhafterweise ist eine Wellenlänge der Lichtquelle auf ein Absorptionsmaximum des zu bearbeitenden Materials des Werkstücks abgestimmt, so dass ein möglichst energieeffizienter Wärmeeintrag in das Werkstück durch das Licht der Lichtquelle realisiert ist.

Das bewegbare Werkzeug ist entlang einer Bewegungsachse der Fügewerkzeugeinheit bewegbar vorhanden. Zum Beispiel ist das bewegbare Werkzeug ausschließlich linear entlang der Bewegungsachse der Fügewerkzeugeinheit bewegbar vorhanden. Bevorzugterweise ist die Fügewerkzeugeinheit ausgebildet, im angeordneten Zustand eines Werkstücks an der Fügewerkzeugeinheit das Werkstück durch eine Bewegung des bewegbaren Werkzeugs in Richtung des Werkzeuggegenelements zu fügen. Eine insbesondere maximale Bewegungsgeschwindigkeit des bewegbaren Werkzeugs relativ zum Werkzeuggegenelement beträgt zwischen 0,1 m/s und 2 m/s, z.B. zwischen 1m/s und 2m/s.

Für die Bewegung des bewegbaren Werkzeugs und/oder des Niederhalters ist beispielsweise ein Antrieb z.B. ein Linearantrieb vorgesehen, wie z.B. eine pneumo-hydraulische, hydraulische, pneumatische und/oder elektrische Antriebseinheit. Vorzugsweise umfasst der Antrieb für das bewegbare Werkzeug und/oder den Niederhalter einen elektromechanischen Servoantrieb.

Das bewegbare Werkzeug ist beispielsweise als eine Matrizeneinheit oder als eine Stempeleinheit ausgebildet. Weiter ist das Werkzeuggegenelement beispielsweise als eine Matrizeneinheit oder als eine Stempeleinheit ausgebildet.

Beispielsweise ist eine Stempeleinheit vorhanden, welche den Niederhalter und das bewegbare Werkzeug umfasst. Zum Beispiel ist der Niederhalter als ein Stempel-Niederhalter und das bewegbare Werkzeug als ein Stempelwerkzeug ausgebildet. Beispielsweise ist das Werkzeuggegenelement als eine Matrize vorhanden.

Denkbar ist auch, dass eine Matrizeneinheit vorhanden ist, welche den Niederhalter und das bewegbare Werkzeug umfasst. Zum Beispiel ist der Niederhalter als ein Matrizen-Niederhalter und das bewegbare Werkzeug als eine Matrize ausgebildet. Beispielsweise ist das Werkzeuggegenelement als ein Stempelwerkzeug vorhanden. In beiden voran genannten Fällen ist der Niederhalter dazu ausgebildet, eine Niederhaltefunktion und/oder Abstreiferfunktion bereitzustellen.

Vorstellbar ist, dass das bewegbare Werkzeug als ein Stempelwerkzeug ausgebildet ist und das Werkzeuggegenelement als eine Matrize, oder umgekehrt. Vorstellbar ist auch, dass die Fügewerkzeugeinheit zwei bewegbare Werkzeuge aufweist, wobei die bewegbaren Werkzeuge sich gegenüberliegend an der Fügewerkzeugeinheit vorhanden sind. Bevorzugterweise sind die beiden bewegbaren Werkzeuge linear beweglich vorhanden. Beispielsweise umfasst das Werkzeuggegenelement ein bewegbares Werkzeug. Weiter ist vorstellbar, dass eine Fügewerkzeugeinheit zwei Niederhalter mit jeweils einem bewegbaren Werkzeug aufweist, wobei beispielsweise ein bewegbares Werkzeug ein Stempelwerkzeug ist und ein bewegbares Werkzeug eine Matrize ist, wobei die beiden Niederhalter mit dem bewegbaren Werkzeug gegenüberliegend an der Fügewerkzeugeinheit angeordnet sind.

Weiter kann zum Beispiel an beiden Niederhaltern jeweils ein Lichtleitungssystem angeordnet sein, wobei beispielsweise nur ein Niederhalter ein bewegbares Werkzeug und der andere Niederhalter ein Werkzeuggegenelement aufweist. Weiter können beispielsweise auch beide Niederhalter jeweils ein bewegbares Werkezeug und ein Lichtleitungssystem aufweisen. Zum Beispiel ist es möglich, beide Werkstückseiten zu bestrahlen und damit zu erwärmen. Beispielsweise ist eine gegenseitige Abstimmung der beiden Lichtstrahlen vorgebbar, die auf das Werkstück bzw. auf eine erste Werkstückseite und auf eine zweite Werkstückseite auftreffen. Zum Beispiel ist über die Kontrolleinheit vorgebbar, z.B. ist ein Beginn der Bestrahlung, ein Ende der Bestrahlung bzw. eine Dauer der jeweiligen bzw. der gleichzeitigen beidseitigen Bestrahlung und/oder eine Energiemenge bzw. Intensität der beiden Lichtstrahlen vorgebbar.

Durch die zwei Lichtleitungssysteme lässt sich vorteilhafterweise ein Werkstück von einer ersten Seite, von einer zweiten Seite oder beidseitig mit dem Lichtstrahl beaufschlagen. Bei der beidseitigen Bestrahlung ist vorteilhafterweise effektiv eine gewünschte bzw. gegenüber einer alleinigen Lichtbestrahlung möglich in kürzerer Zeit eine entsprechende Energiemenge bzw. Intensität dem Werkstück zuzuführen. Auch können bei der beidseitigen Bestrahlung zwei übereinanderliegende Werkstückteile, welche zwischen den beiden Niederhaltern angeordnet sind, durch die Lichtleitungssysteme erwärmt werden.

Auch erweist es sich von Vorteil, dass der Niederhalter und das Werkzeuggegenelement relativ zueinander bewegbar vorhanden sind. Hierdurch ist die Fügewerkzeugeinheit vergleichsweise flexibel einsetzbar.

Beispielsweise ist der Niederhalter relativ zum Werkzeuggegenelement bewegbar vorhanden. Zum Beispiel sind der Niederhalter und das bewegbare Werkzeug durch den Antrieb unabhängig voneinander bewegbar vorhanden. Der Niederhalter ist bevorzugterweise durch den Antrieb in Richtung des Werkzeuggegenelements bewegbar. Denkbar ist, dass der Niederhalter und das Werkzeuggegenelement durch den Antrieb relativ zueinander bewegbar vorhanden sind.

Beispielsweise kann der Antrieb den Niederhalter und/oder das Werkzeuggegenelement bewegen. Der Niederhalter umschließt das bewegbare Werkzeug vorteilhafterweise umfänglich über eine Längserstreckung des bewegbaren Werkzeugs. Im Niederhalter ist eine Bohrung für das bewegbare Werkzeug vorgesehen, wobei das bewegbare Werkzeug entlang der Bohrung im Niederhalter linear beweglich ist.

Vorteilhafterweise sind der Niederhalter und das Werkzeuggegenelement aufeinander zu bewegbar, so dass ein angeordnetes Werkstück zwischen dem Niederhalter und dem Werkzeuggegenelement klemmbar ist. Beispielsweise ist hierdurch zum einen ein Werkstück für einen Fügevorgang festlegbar, zum anderen sind hierdurch auch Werkstückteile des Werkstücks aneinander klemmbar, so dass ein Wärmeübertrag von einem Werkstückteil zu einem anderen Werkstückteil des Werkstücks verbessert ist.

Beispielsweise sind der Niederhalter, das Lichtleitungssystem und/oder die Lichtquelle derart zueinander oder aneinander angeordnet, dass der Niederhalter, das Lichtleitungssystem und/oder die Lichtquelle ausschließlich gemeinsam bewegbar vorhanden sind. Zum Beispiel sind der Niederhalter, das Lichtleitungssystem und/oder die Lichtquelle positionsfest zueinander vorhanden.

Beispielsweise hüllt das Lichtleitungssystem das Licht der Lichtquelle entlang eines Lichtstrahls des Lichts ein, so dass das Licht in radialer Richtung zum Lichtstrahl nach außen durch das Lichtleitungssystem lichtdicht abgeschirmt ist. Das Lichtleitungssystem ist vorzugsweise im Niederhalter derart ausgestaltet, dass das Lichtleitungssystem das Licht entlang des Lichtstrahls einhüllt, so dass das Licht in radialer Richtung zum Lichtstrahl nach außen durch das Lichtleitungssystem abgeschirmt ist.

In der Praxis treten selbst bei in der Praxis besten Bedingungen geringe Anteile des Lichtstrahls als Streulicht auf im aufgesetzten Zustand des Niederhalters am Werkstück. Denn regelmäßig ist keine absolut plane Anlage von Abschnitten des Niederhalters und Abschnitten der Oberfläche des Werkstücks realisierbar bzw. erfolgt kein exakt senkrechtes Aufliegen des Niederhalters auf die Werkstückoberfläche. Damit treten in der Praxis regelmäßig Spaltbereiche mit geringer Spaltbreite zum Beispiel im Zehntelmillimeterbereich zwischen Niederhalter- bzw. Niederhalterstirnseitenoberfläche und Werkstückoberfläche im angeordneten Zustand am Werkstück auf. Anteile des Streulichts können durch einen Spalt zwischen Niederhalter bzw. dessen Stirnseite und der Oberfläche des Werkstücks nach außen in die Umgebung der Fügewerkzeugeinheit treten. Der Spalt kann aufgrund z.B. von Unebenheiten wie insbesondere punktuelle Vertiefungen oder Erhöhungen der beiden gegenüberliegenden Flächen am Niederhalter und dem Werkstück existieren und/oder aus einer nicht parallelen Ausrichtung der sich gegenüberliegenden Flächen ergeben, z.B. zwischen Niederhalterstirnseite und Werkstückoberfläche.

Ebenfalls wird vorgeschlagen, dass der Niederhalter derart ausgebildet ist, dass im angeordneten Zustand eines Werkstücks an der Fügewerkzeugeinheit der Niederhalter in der Position derart an der Oberfläche des Werkstücks anstehend angeordnet ist, dass der Niederhalter die Fügestelle des Werkstücks umschließt, so dass maximal 20% der Strahlungsleistung des Lichts zwischen Niederhalter und Oberfläche des Werkstücks nach außen abstrahlt bzw. so dass maximal 20% der im unmittelbaren Umgebungsbereich der zu fügenden Stelle des Werkstücks ankommenden Strahlungsleistung des Lichts zwischen Niederhalter und Oberfläche des Werkstücks nach außen abstrahlt.

Beispielsweise ist als Strahlleistung des Lichts der Lichtquelle die Strahlleistung des Lichts anzusehen, welche auf ein an die Fügewerkzeugeinheit angeordnetes Werkstück einwirkt. Beispielsweise ist die unmittelbar an der Lichtquelle austretende Strahlleistung des Lichts größer als die Strahlleistung des Lichts, welche auf ein an die Fügewerkzeugeinheit angeordnetes Werkstück einwirkt, insbesondere aufgrund von Reflexions- und Absorptionsverlusten des Lichts auf seinem Weg von der Lichtquelle bis zur Fügestelle.

Bevorzugterweise ist im Niederhalter eine Ausnehmung des Lichtleitungssystems vorhanden. Bevorzugterweise ist innerhalb des Niederhalters, vorzugsweise umfänglich zu einer Lichtleitungsachse vollständig geschlossen, die Ausnehmung des Lichtleitungssystems vorhanden, insbesondere eine zylindrische Ausnehmung, wobei entlang der Zylinderachse der Ausnehmung, z.B. der Längserstreckung der Ausnehmung, das Licht in Richtung des Werkstücks geleitet werden kann. Die Ausnehmung ist beispielsweise als eine Bohrung, z.B. als eine Durchgangsbohrung am Niederhalter vorhanden. Die Ausnehmung ist beispielsweise von Material des Niederhalters umgeben, das an die Ausnehmung heranreicht. Denkbar ist auch, dass die Ausnehmung röhrenartig, z.B. als eine Röhre am Niederhalter vorhanden ist. Denkbar ist jedoch auch, dass das Lichtleitungssystem eine Glasfaser aufweist und die Glasfaser am Niederhalter festgelegt ist.

Beispielsweise ist entlang einer Strecke des Lichtstrahls des Lichts bis zu einem werkstückseitigen Ende des Niederhalters ein Strömungskanal für ein Fluid definiert, wobei der Strömungskanal einen Einlass und einen ersten Auslass aufweist, wobei der erste Auslass für das Fluid an einem werkstückseitigen Ende des Niederhalters ausgebildet ist, welcher in einem Fügevorgang in Kontakt mit dem Werkstück ist und wobei ein zweiter Auslass des Strömungskanals vorgesehen ist.

Vorteilhafterweise ist das Lichtleitungssystem derart am Niederhalter vorhanden, dass ein Lichtstrahl des Lichts der Lichtquelle ausschließlich in einem Winkel größer 0° zu einer Bewegungsachse des bewegbaren Werkzeugs auf die Fügestelle einstrahlt. Vorzugsweise ist der Einfallswinkel so steil wie möglich zur Bewegungsachse des linear bewegbaren Werkzeugs. Bevorzugterweise ist das Lichtleitungssystem derart ausgestaltet, dass der Lichtstrahl des Lichts ausschließlich in einem Winkelbereich zwischen 5° bis 40° relativ zur Bewegungsachse des linear bewegbaren Werkzeugs auf die Fügestelle des Werkstücks einstrahlt. Vorteilhafterweise ist eine Längsachse der Ausnehmung, insbesondere einer ersten Ausnehmung, in einem Winkelbereich zwischen 5° bis 40° relativ zur Bewegungsachse des bewegbaren Werkzeugs an dem Niederhalter vorhanden.

Die leichte Schrägausrichtung des Lichtstrahls hin zur bzw. auf die Fügestelle am Werkstück ermöglicht vorteilhafterweise eine vergleichsweise schlanke Bauweise des Niederhalters, insbesondere in seinem vorderen zum Werkzeuggegenelement zugewandten Endabschnitt. Damit findet vorzugsweise nahezu keine Veränderung eines Außenmaßes des Niederhalters statt, was z.B. vorteilhaft ist für die Anordnung und Zugänglichkeit der Fügewerkzeugeinheit am Werkstück bzw. der mit dem bewegbaren Werkzeug zu bearbeitenden Fügestelle.

Denkbar sind Einstellmittel zur Einstellung des Winkelbereichs, wodurch der Lichtstrahl relativ zur Bewegungsachse des linear bewegbaren Werkzeugs einstellbar ist. Dabei wird der durch die Einstellmittel einstellbare Einstellwinkel bevorzugterweise durch die Ausgestaltung der Ausnehmung begrenzt.

Weiter ist vorteilhafterweise eine zweite Ausnehmung am Niederhalter vorhanden. Denkbar ist, dass die zweite Ausnehmung spiegelsymmetrisch zur ersten Ausnehmung am Niederhalter vorhanden ist. Bevorzugterweise verläuft die Spiegelachse parallel zu der Bewegungsachse des bewegbaren Werkzeugs. Verläuft beispielsweise die Bewegungsachse des bewegbaren Werkzeugs mittig durch den Niederhalter bzw. das bewegbare Werkzeug entspricht vorzugsweise die Bewegungsachse der Spiegelachse.

Die Ausnehmungen sind vorzugsweise derart am Niederhalter ausgebildet, dass das Licht entlang der ersten Ausnehmung auf das Werkstück geleitet wird, wenn die Fügewerkzeugeinheit am Werkstück anliegt und dass das vom Werkstück reflektierte Licht entlang der zweiten Ausnehmung geleitet wird. Durch die Führung des Lichtstrahls entlang der ersten und der zweiten Ausnehmungen im Niederhalter kann auf eine Schutzkabine verzichtet werden.

Beispielsweise umfasst der Niederhalter eine Strahlenfalle oder ein Strahlensumpf, in welchem das reflektierte Licht eingefangen und absorbiert wird. Bevorzugterweise befindet sich am Ende der zweiten Ausnehmung die Strahlenfalle oder der Strahlensumpf. Das Ende der zweiten Ausnehmung ist vorzugsweise in entgegengesetzter Richtung zum Werkstück ausgebildet.

Mit dem vorgeschlagenen Lichtleitungssystem wird vorteilhafterweise ein praxistauglicher Einsatz der Fügewerkzeugeinheit möglich. Insbesondere kann die Fügewerkzeugeinheit vorteilhaft ohne gravierende Zusatzmaßnahmen, was z.B. Sicherheitsaspekte bezüglich eines Gefahrenpotentials von hoher Lichtenergie angeht, eingesetzt werden.

Beispielsweise umfasst der Niederhalter eine Vertiefung. Zum Beispiel befindet sich die Vertiefung gegenüberliegend zum Werkzeuggegenelement, so dass die Vertiefung im angeordneten Zustand eines Werkstücks an der Fügewerkzeugeinheit und im anstehenden Zustand des Niederhalters am Werkstück sich im Bereich, um die Fügestelle des Werkstücks befindet.

Vorzugsweise gehen die erste und die zweite Ausnehmung jeweils an einem Ende in die Vertiefung über. Zum Beispiel greift das bewegbare Werkzeug beim Fügevorgang in die Vertiefung hinein oder durch die Vertiefung hindurch. Die Vertiefung ist bevorzugterweise als eine Bohrung am Niederhalter vorhanden.

Beispielsweise ist der Niederhalter derart vorhanden, dass der Niederhalter die Vertiefung umschließt, so dass in einem idealen Fall der Niederhalter im anstehenden Zustand am Werkstück zusammen mit dem Werkstück die Vertiefung vollständig umschließt.

Bevorzugterweise ist neben der zweiten Ausnehmung eine Aussparung vorhanden, wobei die Aussparung an einem Abschnitt der zweiten Ausnehmung beginnt und zu einem Ende der Aussparung verläuft. Eine Längserstreckung der Aussparung verläuft vorzugsweise parallel zur Bewegungsachse des bewegbaren Werkzeugs. Die Aussparung ist vorzugsweise zylindrisch ausgebildet.

Das Lichtleitungssystem beginnt beispielsweise direkt nach der Lichtquelle des Lichtstrahls und endet an der zweiten Ausnehmung bzw. an der Strahlenfalle oder Strahlensumpf. Der Strömungskanal des Fluids verläuft vorzugsweise entlang dem Lichtleitungssystem und endet in einer Richtung zum Beispiel an einem Kollimator oder z.B. einer Einzellinse oder zum Beispiel einem geschliffenen Faserende. Zum Beispiel ist der Kollimator oder die Einzellinse oder das geschliffene Faserende vorzugsweise nach der Lichtquelle des Lichtstrahls angeordnet, so dass das Licht der Lichtquelle beeinflusst wird. Der Strömungskanal umfasst vorzugsweise auch die Aussparung, so dass das Fluid sowohl in die zweite Ausnehmung als auch in die Aussparung gelangen kann.

Das Fluid, welches sich in dem Strömungskanal befindet, ist vorzugsweise ein Gas, wie z.B. Stickstoff oder Luft. Vorteilhafterweise kann Stickstoff verwendet werden, da dieses keine Partikel oder Flüssigkeiten, wie z.B. Wasser, aufweist. Neben Stickstoff kann auch Luft verwendet werden, wobei die Luft bevorzugterweise von Partikeln und Flüssigkeiten befreit wird. Das Fluid wird vorzugsweise im Einlass in das Lichtleitungssystem bzw. dem Strömungskanal eingelassen. Der Einlass ist vorzugsweise vor der ersten Ausnehmung und nach dem Kollimator bzw. der Linse bzw. dem Faserende am Strömungskanal angeordnet. Bevorzugterweise ist am Einlass ein Anschluss für eine Fluidversorgung vorhanden, wie z.B. zu einer Stickstoffgasflasche.

Der erste Auslass ist vorzugsweise am werkstückseitigen Ende des Niederhalters ausgebildet, wobei die erste Ausnehmung am ersten Auslass endet und die zweite Ausnehmung am ersten Auslass beginnt. Der Auslass ist vorzugsweise ein Teil der Vertiefung des Niederhalters. Bevorzugterweise liegt der erste Auslass am Werkstück an, wenn eine Fügeverbindung hergestellt wird, wobei das bewegbare Werkzeug vorzugsweise am ersten Auslass auf das Werkstück trifft. Der erste Auslass ist vorzugsweise etwas breiter ausgestaltet als das bewegbare Werkzeug breit ist. Die Breite des bewegbaren Werkzeugs ist beispielsweise senkrecht zur Bewegungsachse des bewegbaren Werkzeugs ausgebildet.

Der zweite Auslass ist vorzugsweise am Ende der Aussparung angeordnet. Der zweite Auslass ist bevorzugterweise eine Öffnung im Niederhalter, wobei das Fluid im Strömungskanal aus der Öffnung ausströmen kann. Weiter kann durch das Fluid störende Feststoffe oder Flüssigkeiten aus dem Strömungskanal entfernt werden, da das Fluid diese mit sich tragen kann. Insbesondere sind Feststoffe für das Lichtleitungssystem bzw. Optiken im Lichtleitungssystem störend. Der zweite Auslass kann auch z.B. mit einer Pumpe verbunden sein, so dass das Fluid aktiv aus dem Strömungskanal entfernbar ist.

Von Vorteil ist, dass am Strömungskanal ein Sensor angeordnet ist.

Vorzugsweise ist der Sensor als ein Drucksensor und/oder als ein Strömungssensor ausgebildet. Der Sensor ist beispielsweise an der Aussparung angeordnet, bevorzugterweise im Nahbereich des zweiten Auslasses. Der Sensor kann aber an jeder Stelle des Strömungskanals ausgebildet sein. Weiter können im Strömungskanal mehrere Sensoren angeordnet werden, so dass der Druck an unterschiedlichen Stellen des Strömungskanals messbar ist.

Von Vorteil ist, dass eine Änderung des Drucks mit dem Sensor messbar ist.

Bevorzugterweise ändert sich der Druck abhängig davon, ob die Fügewerkzeugeinheit bzw. der Niederhalter am Werkstück aufliegt. Vorteilhafterweise ist der Druck im Strömungskanal höher, wenn der erste Auslass durch das Werkstück abgedeckt, insbesondere komplette abgedeckt ist, da sonst das Fluid durch den ersten Auslass aus dem Niederhalter ausströmen kann.

Bevorzugterweise wird der erste Auslass dauerhaft während der Herstellung der Fügeverbindung von dem Werkstück abgedeckt. Bevorzugterweise beginnt die Herstellung der Fügeverbindung, wenn der Niederhalter am Werkstück anliegt, insbesondere wenn der erste Auslass durch das Werkstück abgedeckt ist. Der Kontakt zwischen Niederhalter und Werkstück ist vorzugsweise durch Vorgabe einer Kraft beeinflussbar, wobei die Kraft eine Presskraft oder Druckkraft ist, die zwischen Niederhalter und der Oberfläche des Werkstücks wirkt. Hierfür ist z.B. eine mechanische Feder, wie z.B. eine Schrauben-Druckfeder, oder eine Luftfeder vorhanden, die zur Bewegungsachse des bewegbaren Werkzeugs axial auf den Niederhalter drückt bzw. diesen in Richtung zum Werkzeuggegenelement vorspannt.

Der Niederhalter wird vorzugsweise erst nach der Herstellung der Fügeverbindung vom Werkstück wegbewegt. Während der Niederhalter am Werkstück anliegt bzw. auf das Werkstück drückt, erfolgt vorzugsweise sowohl die Bestrahlung des Werkstücks als auch die Bewegung des bewegbaren Werkzeugs in Richtung des Werkstücks zum Ausbilden einer Fügeverbindung und die Bewegung des bewegbaren Werkzeugs zurück in eine Ausgangsposition. Dabei kann die Bewegung des bewegbaren Werkzeugs in Richtung Werkzeuggegenelement gestartet werden und zeitgleich oder zeitlich danach eine Bestrahlung oder Beleuchtung der Fügestelle mit dem Licht beendet werden. Hierdurch ist vorteilhafterweise eine vergleichsweise kurze Fügezykluszeit realisierbar. Die Bestrahlung des Werkstücks kann auch beendet werden, bevor das bewegbare Werkzeug in Richtung des Werkstücks bewegt wird.

Ebenfalls von Vorteil ist, dass der zweite Auslass absperrbar ist.

Der zweite Auslass ist vorzugsweise am Ende der Aussparung angeordnet, wobei der zweite Auslass eine Öffnung zur Außenseite des Niederhalters sein kann. Die Öffnung des zweiten Auslasses kann beispielsweise durch eine mechanisch bedienbare Klappe abgesperrt oder geöffnet werden.

Eine weitere Möglichkeit besteht darin, dass an der Öffnung eine Leitung, beispielsweise eine Gasleitung, angeordnet ist. An der Gasleitung kann beispielsweise ein Ventil ausgebildet sein, wobei durch das Ventil der zweite Auslass geöffnet oder geschlossen werden kann.

Denkbar ist auch das an dem zweiten Auslass eine Absaugleitung angeordnet ist, so dass aktiv Fluid aus dem Strömungskanal entfernt werden kann. Die Absaugleitung ist vorzugsweise direkt neben dem Einlass an der Fügewerkzeugeinheit angeordnet.

An der Absaugleitung herrscht zum Beispiel ein Unterdruck. Der Unterdruck wird beispielsweise mit einer Unterdruck-Einrichtung, wie beispielsweise einer Pumpe bereitgestellt, so dass z.B. durch Einschalten oder Ausschalten der Pumpe der zweite Auslass gesperrt oder geöffnet werden kann bzw. Fluid aus dem Strömungskanal entfernt wird oder im Strömungskanal verbleibt. Pumpen sind beispielsweise dauerhaft betreibbar, um z.B. eine konstante Absaugleistung zu erbringen. Beispielsweise ist zwischen der Pumpe und dem zweiten Auslass ein Ventil ausgebildet, wobei durch das Ventil der zweite Auslass versperrt oder geöffnet werden kann.

Vorteilhafterweise kann durch die Kontrolleinheit der zweite Auslass gesperrt oder geöffnet werden. Beispielsweise kann die Kontrolleinheit die mechanisch bedienbare Klappe oder das Ventil bzw. die Pumpe schalten.

Eine Strömung im Strömungskanal ist erzeugbar, wenn durch den Einlass Fluid einströmt und der zweite Auslass offen ist. Dabei kann einfach nur die Öffnung des zweiten Auslasses geöffnet sein, indem die mechanische Klappe die Öffnung freigibt oder das Ventil offen ist. Weiter kann das Fluid auch aus dem offenen zweiten Auslass z.B. durch die Pumpe abgesaugt werden.

Eine Strömung im Strömungskanal ist vorteilhafterweise bei der Herstellung der Fügeverbindung vorhanden. Das bedeutet, dass die Strömung während der Bestrahlung des Werkstücks als auch bei der Bewegung des bewegbaren Werkzeugs im Strömungskanal ausgebildet ist. Auch vor der Aktvierung der Lichtquelle ist vorteilhafterweise eine Strömung ausgebildet, da dadurch Verschmutzungen, wie beispielsweise störenden Partikel und Gase, aus dem Strömungskanal bzw. aus dem Lichtleitungssystem bzw. von den Optiken des Lichtleitungssystems entfernt werden. Auch nach dem Abschalten der Lichtquelle ist vorteilhafterweise eine Strömung im Strömungskanal vorhanden, so dass Schmutzpartikel oder Gase, die während des Fügevorgangs freigesetzt werden, insbesondere im Nahbereich des ersten Auslasses, durch das Fluid abtransportiert bzw. aus dem Strömungskanal entfernt werden.

Kurz nach dem Herstellen der Fügeverbindung und dem Erreichen der Ausgangsposition des bewegbaren Werkzeugs kann der zweite Auslass wieder geschlossen werden.

Vorteilhafterweise umfasst das Lichtleitungssystem Optiken, wobei das Fluid derart durch den Strömungskanal leitbar ist, dass das Fluid die Optiken kühlt und reinigt.

Die Optiken sind vorzugsweise Spiegel, Linsen, Schutzgläser und dergleichen.

Vorteilhafterweise verläuft entlang des Strömungskanals eine Fluidströmung, so dass Verschmutzungen, wie z.B. Staubpartikel oder Rußpartikel, aus dem Strömungskanal mit dem Fluid entfernt werden. Dabei strömt vorteilhafterweise das Fluid vom Einlass entlang der Optiken zu dem zweiten Auslass, wenn der erste Auslass durch das Werkstück abgedeckt ist. Bevorzugterweise wird ein Optikbereich des Lichtleitungssystems durch ein Schutzglas von den Ausnehmungen im Niederhalter getrennt. In den Optikbereich sind beispielsweise die Spiegel angeordnet und ist vorteilhafterweise der Einlass ausgebildet, so dass das partikelfreie Fluid in den Optikbereich einströmt. Das im Optikbereich vorhandene Fluid kann am Schutzglas nur seitlich an den Außenbereichen entlang strömen. Dadurch wird das Fluid im Optikbereich vorteilhafterweise gestaut, wenn durch den Einlass Fluid in den Optikbereich eingelassen wird. Der Druck im Optikbereich ist vorzugsweise gleich oder größer als der Druck in den Ausnehmungen des Niederhalters. Um die Optiken zu schützen, wird vorteilhafterweise dauerhaft Fluid über den Einlass in den Optikbereich eingelassen, selbst wenn die Fügewerkzeugeinheit nicht in Betrieb ist.

Vorteilhafterweise kann die Menge des Fluids, welches durch den Einlass in den Strömungskanal einströmt, geregelt und/oder gesteuert werden. Bevorzugterweise strömt mehr Fluid durch den Einlass in den Strömungskanal ein, wenn eine Strömung im Strömungskanal erzeugt wird bzw. wenn der erste Auslass verdeckt und der zweite Auslass geöffnet ist, als wenn der erste Auslass geöffnet ist. Beispielsweise strömt gleich viel Fluid in den Strömungskanal ein, wie abgesaugt wird, wenn eine Strömung im Strömungskanal erzeugt wird.

Weiter kann durch Strömung des Fluids entlang des Strömungskanals Wärme, welche durch den Lichtstrahl entsteht, entfernt werden. Eine weitere Möglichkeit besteht darin, dass ein gekühltes bzw. kaltes Fluid in den Strömungskanal eingelassen wird, dadurch kann die Temperatur im Strömungskanal bzw. der Optiken weiter herabgesetzt werden. Beispielsweise kann durch das Fluid zusätzlich der Strahlensumpf bzw. die Strahlenfalle gekühlt werden.

Weiter weist der Strahlensumpf bzw. die Strahlenfalle vorzugsweise eine Kühlplatte an dem Ende der zweiten Ausnehmung auf, wobei die Kühlplatte an einer Außenseite des Niederhalters angeordnet ist. Die Kühlplatte dient vorzugsweise dazu, die absorbierte oder eingefangene Wärmeenergie der Strahlenfalle bzw. des Strahlensumpfs abzuführen. Die Kühlplatte kann austauschbar am Niederhalter angeordnet sein. Weiter ist vorstellbar, dass die Strahlenfalle bzw. der Strahlensumpf aktiv, z.B. durch eine Flüssigkeitskühlung, gekühlt wird. Beispielsweise wird die Strahlenfalle bzw. der Strahlensumpf allein oder zusätzlich mit dem im Strömungskanal geführten Gas- bzw. Luftstrom gekühlt.

Ebenfalls von Vorteil ist, dass die Fügewerkzeugeinheit eine Kontrolleinheit umfasst, wobei die Kontrolleinheit Daten des Sensors erfassen kann.

Die Kontrolleinheit ist bevorzugterweise eine programmierbare Rechnereinheit, wobei vorzugsweise die Kontrolleinheit mit dem Sensor kommunizieren kann. Der Sensor vermittelt der Kontrolleinheit, vorzugsweise den durch den Sensor gemessenen Druck.

Der Betrieb der Fügewerkzeugeinheit erfolgt bevorzugterweise mit der Kontrolleinheit. Vorzugsweise ist die Kontrolleinheit dazu ausgebildet, den Antrieb und/oder die Lichtquelle und/oder eine Komponente des Lichtleitungssystems zu steuern und/oder zu regeln. Weiter ist die Kontrolleinheit beispielsweise dazu ausgebildet, den Niederhalter, insbesondere durch den Antrieb, in Richtung Werkzeuggegenelement zu bewegen, bis der Niederhalter das, an der Fügewerkzeugeinheit angeordnete, Werkstück berührt.

Von Vorteil ist, dass ein vorgegebener Schwellenwert überschreitbar ist, wenn der erste Auslass abgedeckt und der zweite Auslass gesperrt ist.

Beispielsweise wird vor dem Aktivieren des Lichtstrahls durch den Einlass Fluid in den Strömungskanal eingelassen. Beispielsweise wird der erste Auslass durch das Werkstück abgedeckt und der zweite Auslass gesperrt, so dass im Strömungskanal durch das Einlassen des Fluids ein Staudruck entsteht. Der Schwellenwert kann vom Staudruck nur überschritten werden, wenn der Niederhalter senkrecht auf einer Fügefläche des Werkstücks aufliegt bzw. wenn maximal 20% der Strahlungsleistung des Lichts zwischen Niederhalter und Oberfläche des Werkstücks nach außen abstrahlt.

Auch ist es vorteilhaft, dass die Kontrolleinheit den Lichtstrahl aktiviert, wenn der Sensor den vorgegebenen Schwellenwert für den Druck überschreitet.

Der Schwellenwert ist vorzugsweise in der Kontrolleinheit gespeichert, so dass die Kontrolleinheit den vom Sensor gemessenen Druck mit dem Schwellenwert vergleichen kann. Erst beim Überschreiten des Schwellenwerts kann der Lichtstrahl aktiviert werden, so dass an der Auflagefläche des ersten Auslasses am Werkstück das Werkstück durch den Lichtstrahl erwärmt werden kann. Beispielsweise prüft die Kontrolleinheit, ob ein vom Sensor erfasster Druck den Schwellenwert überschreitet, bevor eine Bestrahlung der Fügestelle des angeordneten Werkstücks mit dem Licht der Lichtquelle und/oder bevor eine Bewegung des bewegbaren Werkzeugs gestartet wird. Beispielsweise ist der Sensor dazu ausgebildet, zu ermitteln, ob der Niederhalter an der Position am Werkstück derart ansteht, dass der Niederhalter mit dem Werkstück Licht der Lichtquelle nach Außen in einer Weise lichtdicht abschirmt, dass eine Gefährdung eines Mitarbeiters im Umgebungsbereich der Fügewerkzeugeinheit ausgeschlossen werden kann.

Denkbar ist weiterhin, dass das Lichtleistungssystem einen Shutter aufweist. Beispielsweise ist eine Beleuchtung einer Fügestelle durch das Licht der Lichtquelle mittels des Shutters aktivierbar oder deaktivierbar. Zum Beispiel ist der Shutter als ein optischer Verschluss, z.B. in Form eines mechanischen und/oder elektronischen Verschluss, z.B. als ein bewegliches Element, vorhanden. Das bewegliche Element, das zum Beispiel aus einem lichtundurchlässigen Material besteht, ist z.B. in den Weg des Lichtstrahls diesen blockierend einbringbar und wieder herausbewegbar. Vorteilhafterweise ist der Shutter mittels der Kontrolleinheit ansteuerbar bzw. das bewegliche Element betätigbar.

Weiter ist die Kontrolleinheit der Fügewerkzeugeinheit derart ausgebildet, dass eine Bestrahlung der Fügestelle des angeordneten Werkstücks mit dem Licht der Lichtquelle beendet ist, bevor das bewegbare Werkzeug in einen Lichtstrahl des Lichts der Lichtquelle bei seiner Bewegung in Richtung des Werkzeuggegenelements eintreten kann. Beispielsweise schaltet die Kontrolleinheit kurz vor dem Eintritt des bewegbaren Werkzeugs in den Lichtstrahl des Lichts eine Bestrahlung der Fügestelle des angeordneten Werkstücks ab. Hierdurch wird eine Erwärmung des bewegbaren Werkzeugs und damit eine Beschädigung des bewegbaren Werkzeugs verhindert.

Vorteilhafterweise ist eine Zyklussteuerung eines Fügevorgangs der Fügewerkzeugeinheit vergleichsweise vereinfacht, da eine, insbesondere zentrale Kontrolleinheit vorgesehen ist, welche die Prozesse des Fügevorgangs kontrollieren, regeln und/oder steuern kann.

Es ist vorteilhaft, dass die Kontrolleinheit den Lichtstrahl deaktiviert oder nicht freigibt, wenn der Sensor einen vorgegebenen Schwellenwert für den Druck unterschreitet.

Ist der durch den Sensor gemessene Druck unterhalb des Schwellenwert wird der Lichtstrahl, bevorzugterweise von der Kontrolleinheit deaktiviert.

Befindet sich der durch den Sensor gemessene Druck unterhalb des Schwellenwerts blockiert die Fügewerkzeugeinheit, insbesondere blockiert die Kontrolleinheit, einen Start einer Bestrahlung der Fügestelle des angeordneten Werkstücks mit dem Licht der Lichtquelle und/oder einen Start einer Bewegung des bewegbaren Werkzeugs. Somit kann der Lichtstrahl auch nicht ausversehen oder mit Absicht von einer Person aktiviert werden, wenn die Fügewerkzeugeinheit nicht richtig auf dem Werkstück aufliegt bzw. zu viel Strahlung nach außen strahlen kann.

Eine vorteilhafte Ausführungsform der Erfindung ist eine Werkzeugzange mit einer Fügewerkzeugeinheit nach einer der vorangegangen beschriebenen Ausführungen und mit einem Werkzeugbügel.

Vorteilhafterweise verbindet der Werkzeugbügel das bewegbare Werkzeug mit dem Werkzeuggegenelement, so dass ein Kraftschluss zwischen dem bewegbaren Werkzeug und dem Werkzeuggegenelement realisiert ist. Der Werkzeugbügel ist vorzugsweise ein C-Bügel, welcher beispielsweise an einem Roboterarm befestigt werden kann. Beispielsweise ist die Werkzeugzange als eine Clinch-, Niet-Füge- und/oder Prägezange ausgebildet. Denkbar ist auch, dass die Werkzeugzange als eine Halbhohlstanznietzange und/oder als eine Vollstanznietzange vorhanden ist.

Ebenfalls wird ein Verfahren in Form eines Fügevorgangs eines Werkstücks durch eine Fügewerkzeugeinheit vorgeschlagen, wobei das Verfahren folgenden Verfahrensschritten aufweist:
- Einlassen eines Fluides in einen Strömungskanal,
- Bewegen der Fügewerkzeugeinheit in Richtung eines Werkstücks, bis ein erster Auslass eines Niederhalters auf dem Werkstück aufliegt,
- Sperren eines zweiten Auslasses des Niederhalters,
- Messen eines Drucks durch einen Sensor im Strömungskanal,
- Vergleichen des durch den Sensor gemessenen Drucks mit einem vorgebbaren Schwellenwert für den Druck durch eine Kontrolleinheit,
- Öffnen des zweiten Auslasses und Herstellung einer Strömung im Strömungskanal, wenn der vorgegebene Schwellenwert von dem mit dem Sensor gemessenen Druck überschritten wird,
- Aktivieren einer Lichtquelle durch die Kontrolleinheit,
- Beenden der Bestrahlung der Fügestelle des Werkstücks zeitgleich mit dem Start der Bewegung des bewegbaren Werkzeugs der Fügewerkzeugeinheit in Richtung des Werkstücks oder zeitlich nach dem Start der Bewegung des bewegbaren Werkzeugs der Fügewerkzeugeinheit in Richtung des Werkstücks,
- Absperren des zweiten Auslasses durch die Kontrolleinheit,
- Wegbewegen der Fügewerkzeugeinheit bzw. Niederhalter vom Werkstück.

Beispielsweise finden die vorangegangen genannten Verfahrensschritte in der oben aufgeführten Reihenfolge aufeinander folgend statt. Denkbar ist auch, dass einzelne Verfahrensschritte überlagert oder gleichzeitig ablaufen. Beispielsweise findet das Einlassen des Fluids nach dem Bewegen der Fügewerkzeugeinheit statt.

Das Fluid wird z.B. über den kompletten Fügevorgang durch den Einlass in den Strömungskanal eingelassen, wobei das Fluid aus dem ersten Auslass ausströmt, solange der Niederhalter nicht am Werkstück aufliegt. Zum Beispiel wird das zu bearbeitende Werkstück in einem Verfahrensschritt zwischen dem bewegbaren Werkzeug und dem Werkzeuggegenelement an der Fügewerkzeugeinheit angeordnet, z.B. positioniert. Die Positionierung des zu bearbeitenden Werkstücks kann hierbei durch eine von der Fügewerkzeugeinheit extern vorhandene Positioniereinheit, z.B. einem Roboterarm vorgenommen werden. Denkbar ist auch, dass die Positioniereinheit Bestandteil der Fügewerkzeugeinheit ist. Bevorzugterweise liegt das zu bearbeitende Werkstück am Werkzeuggegenelement an. Mittels des Antriebs wird die Fügewerkzeugeinheit zu dem bearbeiten Werkstück bewegt, bis der erste Auslass des Niederhalters am Werkstück aufliegt. Nachdem der Niederhalter am Werkstück aufliegt, wird durch den Antrieb das bewegbare Werkzeug in Richtung des Werkstücks bewegt, so dass das bewegbare Werkzeug einen kürzeren Weg zum Werkstück zurücklegen muss, wenn das zu bearbeitende Werkstück durch den Lichtstrahl erwärmt wurde. Durch die Bewegung des bewegbaren Werkzeugs wird ein Federelement geladen, dadurch wird auf den Niederhalter eine Kraft in Richtung des Werkstücks ausgeübt. Durch die Kraft, die auf den Niederhalter wirkt, wird der erste Auslass gegen das Werkstück gedrückt, so dass bei eingeschaltetem Lichtstrahl wenig bzw. fast keine vom Werkstück reflektierten Strahlen aus dem Niederhalter austreten können.

Um die Position des Niederhalters am Werkstück zu überprüfen, wird im Strömungskanal der Druck bestimmt, dafür wird vorzugsweise der zweite Auslass geschlossen. Dadurch staut sich das Fluid innerhalb des Strömungskanals, wenn der erste Auslass am Niederhalter durch das Werkstück abgedeckt ist und wenn der Strömungskanal bzw. das Lichtleitungssystem keine Beschädigungen aufweist. Der durch den Sensor gemessene Druck wird zur Kontrolleinheit kommuniziert, wobei die Kontrolleinheit bevorzugterweise den vom Sensor gemessenen Druck mit einem vorgebaren Schwellenwert vergleicht. Der Schwellenwert ist vorzugsweise derart gewählt, dass selbst bei einem schmalen Spalt zwischen ersten Auslass und Werkstück der durch den Sensor gemessene Druck im Strömungskanal den Schwellenwert nicht überschreiten kann. Damit ist gewährleistet, dass nur bei einem gewünschten, z.B. senkrechten, Aufliegen des Niederhalters am Werkstück die Lichtquelle aktivierbar ist.

Beispielsweise wird nach Überprüfung des Drucks im Strömungskanal der zweite Auslass geöffnet, so dass eine Strömung im Strömungskanal aufgebaut wird. Somit werden vorzugsweise Verschmutzungen aus dem Strömungskanal durch die Strömung im Strömungskanal entfernt.

Ist die Strömung im Strömungskanal ausgebildet aktiviert die Kontrolleinheit die Lichtquelle, so dass die Lichtstrahlen auf das Werkstück treffen. Beispielsweise wird das Werkstück durch die Lichtstrahlen der Lichtquelle erwärmt, wobei ein Teil der Lichtstrahlen, insbesondere wenn die Oberfläche noch nicht erwärmt ist, am Werkstück reflektiert werden. Die reflektierten Lichtstrahlen gelangen entlang der zweiten Ausnehmung zur Strahlenfallen oder Strahlensumpf. Dadurch ist ein Strahlenschutz ohne zusätzliche Strahlenschutzkabine gewährleistet.

Die Temperatur am Werkstück wird vorzugsweise durch ein Pyrometer gemessen. Das Pyrometer ist am Niederhalter angeordnet, wobei eine Bohrung am Niederhalter ausgebildet ist. Zum Beispiel ist die Bohrung relativ zur ersten Ausnehmung um 90° um die Bewegungsachse gedreht am Niederhalter vorhanden. Hierdurch kann eine Wärmestrahlung des Werkstücks über die Bohrung das Pyrometer erreichen, womit eine Temperatur des Werkstücks an der Fügestelle des Werkstücks ermittelt werden kann. Das Pyrometer kommuniziert bevorzugterweise die gemessene Temperatur an die Kontrolleinheit, wobei in der Kontrolleinheit die zu erreichende Temperatur gespeichert ist und mit dem Messwert verglichen wird. Wird die zu erreichende Temperatur beispielsweise nicht vor einer bestimmten Zeitdauer erreicht, wird die Lichtquelle deaktiviert.

Beispielsweise wird insbesondere unmittelbar vor dem Ausschalten der Lichtquelle oder zeitgleich mit dem Ausschalten der Lichtquelle eine Bewegung des bewegbaren Werkzeugs in Richtung Werkzeuggegenelement gestartet, so dass das Werkstück an der Fügestelle gefügt wird. Beispielsweise ist die Kontrolleinheit dazu ausgebildet, zu Prüfen, ob die Lichtquelle und damit eine Beleuchtung des Werkstücks ausgeschaltet ist, wenn das bewegbare Werkzeug einen Bereich des Strahlungswegs der Lichtstrahlen der Lichtquelle auf seinem Weg in Richtung Werkzeuggegenelement erreicht. Vorstellbar ist jedoch auch, dass die Kontrolleinheit zunächst prüft, ob die Lichtquelle und damit eine Beleuchtung des Werkstücks ausgeschaltet ist und erst nach der Überprüfung der ausgeschalteten Lichtquelle eine Bewegung des bewegbaren Werkzeugs aktiviert. Beispielsweise ist während der Herstellung der Fügeverbindung insbesondere dauerhaft eine Strömung im Strömungskanal vorhanden, so dass Verschmutzungen, welche beim Herstellen der Fügeverbindung entstehen, abtransportiert werden können.

Beispielsweise wird das bewegbare Werkzeug nach Beendigung des Fügevorgangs in eine Ausgangsposition zurück bewegt. Zum Beispiel wird anschließend der zweite Auslass geschlossen. Beispielsweise wird anschließend die Fügewerkzeugeinheit vom Werkstück wegbewegt. Beispielsweise strömt dauerhaft Fluid durch den Einlass in Richtung des ersten Auslasses, damit die Optiken nicht verunreinigt werden, auch während der Stillstandzeit.

### Figurenbeschreibung

Weitere Merkmale und Vorteile der Erfindung sind anhand eines schematisiert dargestellten Ausführungsbeispiels der vorliegenden Erfindung näher erläutert.

Im Einzelnen zeigt:
- Fig. 1: eine perspektivische Ansicht von schräg oben auf eine Werkzeugzange mit einer Fügewerkzeugeinheit,
- Fig. 2: eine perspektivische Ansicht eines Teils der Fügewerkzeugeinheit,
- Fig. 3: eine weitere perspektivische Ansicht des Teils der Fügewerkzeugeinheit gemäß Fig. 2,
- Fig. 4: eine Schnittansicht eines Teils der Fügewerkzeugeinheit gemäß Fig. 1, wobei die Fügewerkzeugeinheit mit dem Niederhalter und dem Werkzeuggegenelement an einem Werkstück anliegen und wobei ein Verlauf eines Lichtstahls angedeutet ist,
- Fig. 5: eine Schnittansicht der Anordnung gemäß Fig. 4, wobei ein Verlauf einer Fluidströmung angedeutet ist,
- Fig. 6: eine Schnittansicht eines Teils der Fügewerkzeugeinheit mit Pyrometer,
- Fig. 7: eine Schnittansicht der Anordnung gemäß Fig. 4 und 5, wobei die Fügeverbindung hergestellt ist,
- Fig. 8: eine Schnittansicht der Anordnung gemäß Fig. 4, 5 und 7 in Ausgangsposition nach der Herstellung der Fügeverbindung.

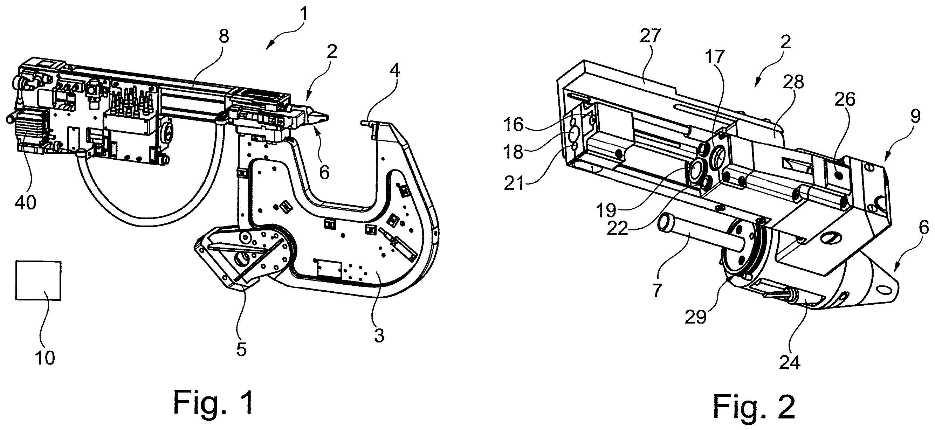

In der Figur 1 ist eine Werkzeugzange 1 mit einer Fügewerkzeugeinheit 2 dargestellt. Die Werkzeugzange 1 weist einen Werkzeugbügel 3 auf, wobei an dem Werkzeugbügel 3 die Fügewerkzeugeinheit 2 bzw. ein Werkzeuggegenelement 4 der Fügewerkzeugeinheit 2 angeordnet ist. Der Werkzeugbügel 3 ist vorzugsweise als C-Bügel ausgestaltet und kann beispielsweise über ein Verbindungselement 5 mit einem in der Figur 1 nicht dargestellten Roboterarm befestig werden.

An der Fügewerkzeugeinheit 2 ist einen Niederhalter 6, ein bewegbares Werkzeug 7 (s. Fig. 2), ein Antrieb 8, eine Lichtquelle 10 und eine Kontrolleinheit 40 angeordnet. Beispielsweise ist die Lichtquelle 10 als ein Laser, insbesondere als ein Faserlaser ausgebildet. Der Antrieb 8 kann ein elektrischer, ein pneumatischer, ein hydraulischer oder ein hydro-pneumatischer Antrieb ausgebildet sein.

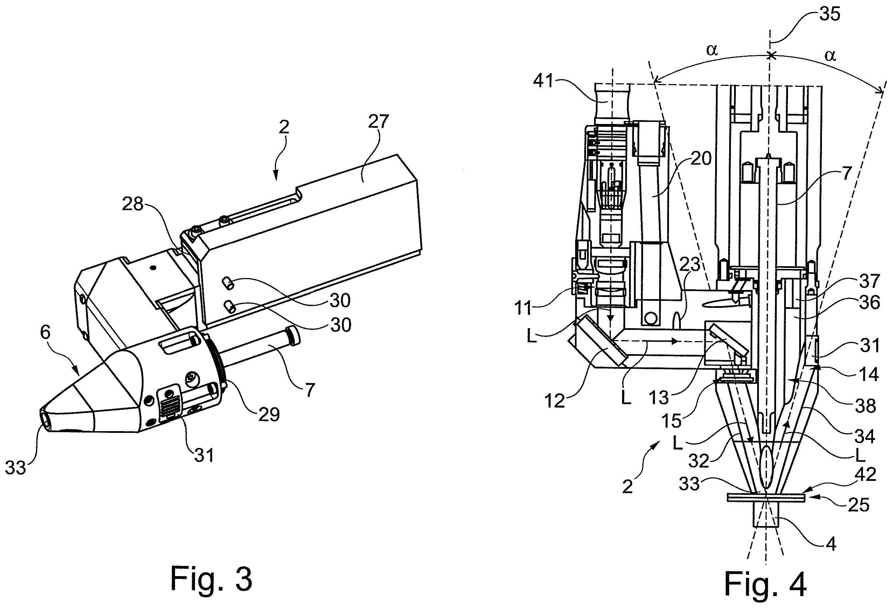

Am Niederhalter 6 sind beispielsweise das bewegbare Werkzeug 7, ein Pyrometer 24 und ein Lichtleitungssystem 9 angeordnet. Das Lichtleitungssystem 9 umfasst einen Kollimator 11, ein ersten Spiegel 12, einen zweiten Spiegel 13, eine Strahlenfalle 14 bzw. Strahlensumpf und einem Schutzglas 15 (s. Fig. 4). Der Kollimator 11 ist vorzugsweise derart ausgestaltet, dass ein kollimierter Lichtstrahl erzeugt wird, zum Beispiel ein kollimierter Laserlichtstrahl erzeugt wird. Beispielsweise werden die Lichtstrahlen der Lichtquelle 10 aufgeweitet und zumindest annähernd parallel zueinander ausgerichtet. Der erste Spiegel 12 ist beispielsweise verstellbar, so dass die Position eines Lichtstrahls der Lichtquelle 10 auf einem zu bearbeitenden Werkstücks 25 eingestellt werden kann. Der zweite Spiegel 13 ist vorzugsweise positionsfest an der Fügewerkzeugeinheit 2 angeordnet. Das Schutzglas 15 bildet bevorzugterweise eine Trennstelle zwischen den Optiken bzw. den Spiegeln 12, 13 und Kollimator 11 des Lichtleitungssystems 9 und dem Niederhalter 6. Weiter kann der Strahlendurchmesser des Lichtstrahls durch ein Verstellelement 26 an der Außenseite Fügewerkzeugeinheit 2 eingestellt werden. Am Ende der Strahlenfalle 14 bzw. des Strahlensumpf ist bevorzugterweise eine Kühlplatte 31 ausgebildet, die die Strahlenfalle 14 bzw. den Strahlensumpf kühlt. Die Kühlplatte 31 ist vorzugsweise an einer Außenseite des Niederhalters 6 lösbar angeordnet, somit kann die Kühlplatte 31, z.B. bei Verschleiß oder Verschmutzung, ausgetauscht oder gereinigt werden.

Die Fügewerkzeugeinheit 2 weist vorzugsweise Steckplätze 16, 17 auf, um die Lichtquelle 10 an der Fügewerkzeugeinheit 2 anzukoppeln (s. Fig. 2). Beispielsweise sind an der Fügewerkzeugeinheit auch Steckplätze 18, 19 für eine Absaugleitung 20 und Steckplätze 21, 22 für einen Einlass 23 vorgesehen, damit ein Fluid eingeströmt bzw. abgesaugt werden kann. Beispielsweise ist das Fluid als ein Gas, z.B. als Luft, insbesondere als von Partikeln gereinigte Luft, ausgebildet. Beispielsweise ist das Fluid als ein gereinigtes Gas, frei von Partikeln vorhanden. Denkbar ist auch, dass das Fluid als ein spezielles Gas, wie z.B. Stickstoff oder Kohlendioxid vorhanden ist.

Eine standardmäßige Werkzeugzange kann nachträglich mit einem Teil der Fügewerkzeugeinheit 2, insbesondere mit einem Niederhalter 6 und Lichtleitungssystem 9, ausgestattet werden, indem der Niederhalter 6 und das Lichtleitungssystem 9 mit einem Antrieb 8, welcher vorzugsweise an einem Werkzeugbügel 3 angeordnet ist, verbunden werden. Dafür weist vorzugsweise die Fügewerkzeugeinheit 2 ein Befestigungselement 27 auf, wobei ein Teil der Fügewerkzeugeinheit 2, insbesondere der Teil der Fügewerkzeugeinheit 2 an dem die Steckplätze 16, 17, 18, 19, 21, 22 ausgebildet sind, durch das Befestigungselement 27 mit dem Antrieb 8 verbunden werden kann. Weiter weist der Niederhalter 6 für die Verbindung mit dem Antrieb 8 ein Anbindungselement 29 auf. Das Befestigungselement 27 ist vorzugsweise aus einem plattenförmigen Material, insbesondere Metall. Das Befestigungselement 27 kann durch Befestigungsmittel 30, z.B. Schrauben, mit dem Antrieb 8 verbunden werden. An dem Befestigungselement 27 ist beispielsweise ein Sicherheitsschalter 28 angeordnet.

In den Figuren 4, 5, 6, 7, und 8 ist eine Schnittansicht von einem Teil der Fügewerkzeugeinheit dargestellt, dadurch kann die Ausgestaltung des Lichtleitungssystems 9 bzw. eines Strömungskanals 38 besser veranschaulicht werden. Von der Lichtquelle 10 koppelt ein Lichtstrahl der Lichtquelle am Lichtleitungssystem 9 im Bereich 41 ein. Der Verlauf des Lichtstrahls wird in Figur 4 schematisch durch Pfeile L dargestellt. Der Lichtstrahl gelangt z. B. von der in Fig. 4 nicht dargestellten Lichtquelle 10 zum Bereich 41 und weiter zum Kollimator 11, wobei der Lichtstrahl anschließend beispielsweise am ersten Spiegel 12 und am zweiten Spiegel 13 reflektiert wird und beispielhaft durch das Schutzglas 15 zum Niederhalter 6 gelangt. Am Niederhalter 6 ist eine erste Ausnehmung 32 ausgebildet, wobei die erste Ausnehmung 32 beispielsweise eine Bohrung im Niederhalter 6 ist. Durch die erste Ausnehmung 32 gelangt der Lichtstrahl vorzugsweise zu einem ersten Auslass 33 (s. Fig. 4), welcher an einem werkstückseitigen Ende des Niederhalters 6 ausgebildet ist. Liegt der Niederhalter 6 an einem Werkstück 25 auf, wird der Lichtstrahl an der vorzugsweise metallenen Werkstückoberfläche 42 reflektiert und gelangt in eine zweite Ausnehmung 34, welche im Niederhalter 6, z.B. als Bohrung, ausgebildet ist. Am Ende der zweiten Ausnehmung 34 ist die Strahlenfalle 14 bzw. der Strahlensumpf ausgebildet, so dass die vom Werkstück 25 reflektierten Lichtstrahlen in der Strahlenfalle 14 bzw. dem Strahlensumpf aufgenommen und absorbiert werden.

Am Ende der ersten Ausnehmung 32 und dem Anfang der zweiten Ausnehmung 34 ist bevorzugterweise eine Vertiefung im Niederhalter 6 gebildet, wobei das bewegbare Werkzeug beispielsweise durch die Vertiefung an dem ersten Auslass 33 auf das Werkstück 25 trifft. Die Vertiefung ist bevorzugterweise als eine Bohrung im Niederhalter 6 vorhanden.

In dem Niederhalter ist weiter vorzugsweise eine Bohrung für das bewegbare Werkzeug 7 vorgesehen, so dass das bewegbare Werkzeug 7 linear entlang einer Bewegungsachse 35 in Richtung des Werkstücks 25 bewegt werden kann. Die Bewegungsachse 35 verläuft vorzugsweise entlang einer Längserstreckung des bewegbaren Werkzeugs 7. Weiter verläuft die Bewegungsachse 35 beispielsweise mittig durch das bewegbare Werkzeug 7. Eine Längsachse der ersten Ausnehmung 32 bzw. der zweiten Ausnehmung 34 ist beispielsweise in einem Winkelbereich α zwischen 5° bis 40° relativ zur Bewegungsachse 35 des bewegbaren Werkzeugs 7 an dem Niederhalter 6 vorhanden (s. Fig. 4). Bevorzugterweise ist die zweite Ausnehmung 34 spiegelsymmetrisch zur ersten Ausnehmung 32 ausgestaltet, wobei beispielsweise die Spiegelebene durch die Bewegungsachse 35 des bewegbaren Werkzeugs 7 verläuft.

Beispielsweise bilden Teile des Lichtleitungssystems 9 den Strömungskanal 38. Zum Beispiel bilden die erste und die zweite Ausnehmung 32, 34 des Lichtleitungssystems 9 und die Vertiefung bzw. der erste Auslass 33 einen Teil des Strömungskanals 38. Vorzugsweise verläuft der Strömungskanal 38 hauptsächlich entlang des Lichtleitungssystems, wobei der Strömungskanal 38 erst nach dem Kollimator 11 anfängt. Weiter weist der Strömungskanal 38 eine Aussparung 36 auf, die vorzugsweise als Bohrung ausgebildet ist. Die Aussparung 36 fängt vorzugsweise an einem Abschnitt der zweiten Ausnehmung 34 an und verläuft parallel zur Bewegungsachse 35 des bewegbaren Werkzeugs 7. Das Fluid gelangt über den Einlass 23 in den Strömungskanal 38 und kann den Strömungskanal 38 entlangströmen. Das Fluid wird bevorzugterweise im Optikbereich nach dem Kollimator 11 bis zum Schutzglas 15 gestaut, da das Fluid nur an den Außenseiten des Schutzglases 15 zur ersten Ausnehmung 32 strömen kann. Dadurch wird in dem Optikbereich nach dem Kollimator 11 bis zum Schutzglas 15 ein Überdruck erzeugt, solange das Fluid durch den Einlass 23 einströmt. Beispielsweise strömt Fluid dauerhaft über den Einlass 23 ein, um die Optiken bzw. die Spiegel 12, 13 sauber zu halten. Das Fluid kann aus dem Strömungskanal 38 durch den ersten Auslass 33 und einen zweiten Auslass 37 strömen. Der zweite Auslass 37 ist vorzugsweise am Ende der Aussparung 36 angeordnet, wobei zweite Auslass 37 beispielsweise mit der Absaugleitung 20 verbunden ist, so dass das einströmende Fluid am Ende der Aussparung 36 abgesaugt werden kann. Bevorzugterweise ist am Strömungskanal 38 eine Absaugleitung 20 angeordnet, aus welcher das Fluid aus dem Strömungskanal 38 abgesaugt werden kann.

Das Fluid wird über den kompletten Fügevorgang durch den Einlass 23 in den Strömungskanal 32 eingelassen, wobei das Fluid aus dem ersten Auslass 33 ausströmt, solange der Niederhalter 6 nicht am Werkstück 25 aufliegt. Für einen Fügevorgang wird vorzugsweise zuerst die Fügewerkzeugeinheit 2 in Richtung des zu bearbeitenden Werkstücks 25 bewegt bis der Niederhalter 6 und das Werkstückgegenelement 4 am Werkstück anliegen.

Beispielsweise werden in einem Fügevorgang zwei Werkstückteile miteinander verbunden werden. Sobald der Niederhalter 6 am Werkstück 25 aufliegt bewegt der Antrieb 8 bevorzugterweise das bewegbare Werkzeug 7 entlang der Bewegungsachse 35 in Richtung des Werkstücks 25. Dies stellt eine Ausgangsposition des bewegbaren Werkzeugs 7 dar. Damit ist der Abstand zwischen bewegbaren Werkzeug 7 und Werkstück 25 minimiert, so dass das bewegbare Werkzeug 7 eine vergleichsweise kurze Wegstrecke zum Werkstück 25 aufweist.

Bei der Bewegung des bewegbaren Werkzeugs 7 durch den Antrieb 8 wird vorzugsweise ein Federelement geladen, wodurch der Niederhalter 6 mit einer Kraft des Federelements gegen das Werkstück 25 gedrückt wird. Dadurch wird der erste Auslass 33 des Niederhalters 6 vorzugsweise fest an das Werkstück 25 gedrückt, wodurch ein Austreten von Licht zwischen Niederhalter 6 und Werkstück 25verhindert werden soll. Weiter kann durch die hohe Anpresskraft des Niederhalters 6 auf das am Niederhalter 6 anliegenden Werkstück 25 Wärme von einem ersten Werkstückteil auf das zweites Werkstückteil des Werkstücks 25, welches am Werkzeuggegenelement 4 anliegt, verbessert übertragen werden.

Beispielsweise erfolgt anschließend eine Überprüfung, ob der Niederhalter 6 wie gewünscht an der Oberfläche des Werkstücks 25, auf welche das bewegbare Werkzeug 7 zuerst einwirkt, anliegt. Dafür wird die vorzugsweise die Position des bewegbaren Werkzeugs 7 durch die Kontrolleinheit 40 bestimmt. Da das bewegbare Werkzeug 7 mit dem Antrieb 8 verbunden ist, wird bevorzugterweise über den Sicherheitsschalter 28 zusätzlich die Position des Niederhalters 6 und des Lichtleitungssystems 9 überprüft. Zum Beispiel wird, nachdem beide Prüfungen die gewünschten Ergebnisse liefern und als richtig identifiziert wurden, der Druck innerhalb des Strömungskanals 38 bestimmt.

Zur Druckbestimmung wird vorzugsweise der zweite Auslass 37 bzw. ein Ventil zur Pumpe an der Absaugleitung 20 geschlossen (s. Fig. 4). Dadurch staut sich das Fluid innerhalb des Strömungskanals 38, wenn der erste Auslass 33 am Niederhalter 6 durch das Werkstück 25 abgedeckt ist und wenn der Strömungskanal 38 bzw. das Lichtleitungssystem 9 keine Beschädigungen aufweist. Der Druck im Strömungskanal 38 wird vorteilhafterweise durch einen Sensor (nicht dargestellt) gemessen. Der durch den Sensor gemessene Druck wird zur Kontrolleinheit 40 kommuniziert, wobei die Kontrolleinheit 40 bevorzugterweise den vom Sensor gemessenen Druck mit einem vorgebaren Schwellenwert vergleicht (s. Fig. 1). Der Schwellenwert ist vorzugsweise derart gewählt, dass selbst bei einem schmalen Spalt zwischen ersten Auslass 33 und Werkstück 25 der durch den Sensor gemessene Druck im Strömungskanal 38 den Schwellenwert nicht überschreiten kann. Damit ist gewährleistet, dass nur bei einem gewünschten, z.B. senkrechten, Aufliegen des Niederhalters 6 am Werkstück 25 die Lichtquelle 10 aktivierbar ist, so dass keine Lichtstrahlung bzw. von dem Werkstück 25 reflektierte Lichtstrahlung nach außen austritt.

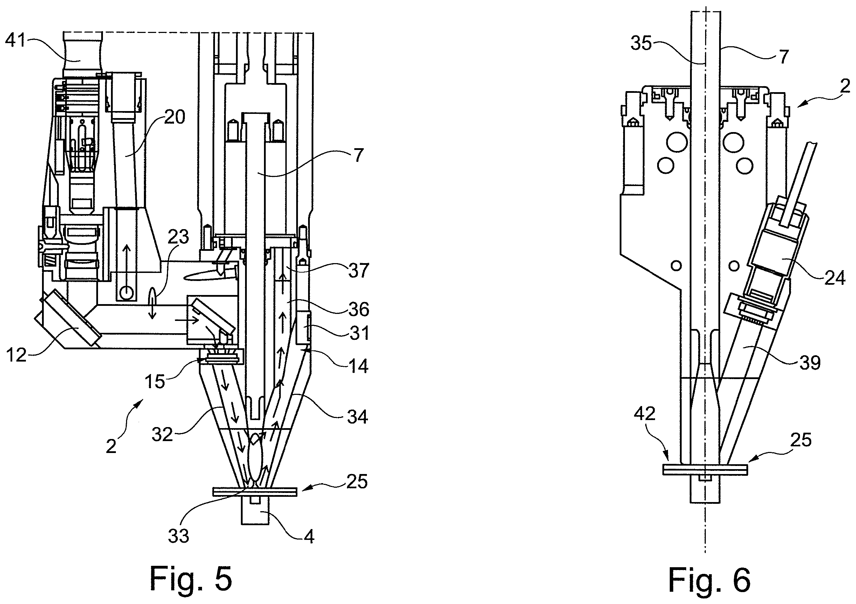

Beispielsweise wird nach Überprüfung des Drucks im Strömungskanal 3 der zweite Auslass 37 und/oder ein Ventil zur Pumpe der Absaugleitung 20 geöffnet, so dass eine Strömung im Strömungskanal 38 wieder aufgebaut wird (s. Fig. 5, Pfeile). Das Fluid strömt somit vom Einlass 23 zum zweiten Spiegel 13, zum Schutzglas 15 entlang der ersten Ausnehmung 32 zur zweiten Ausnehmung 34 entlang der Aussparung 36 zum zweiten Auslass 37 und wird am zweiten Auslass 37 abgesaugt. Somit werden vorzugsweise Verschmutzungen aus dem Strömungskanal 38 durch die Strömung im Strömungskanal 38 entfernt.

Ist die Strömung im Strömungskanal 38 ausgebildet aktiviert die Kontrolleinheit 40 die Lichtquelle 10, wobei der Lichtstrahl vom Kollimator 11 auf den ersten Spiegel 12 trifft und am ersten und zweiten Spiegel 12, 13 reflektiert werden, so dass die Lichtstrahlen entlang der ersten Aussparung 32 auf das Werkstück 25 treffen (s. Fig. 4, Pfeile L). Beispielsweise wird das Werkstück 25 durch die Lichtstrahlen der Lichtquelle 10 erwärmt, wobei ein Teil der Lichtstrahlen, insbesondere wenn die Oberfläche noch nicht erwärmt ist, am Werkstück 25 reflektiert werden. Die reflektierten Lichtstrahlen gelangen entlang der zweiten Ausnehmung 34 zur Strahlenfallen 14 oder Strahlensumpf, dadurch dass, der Niederhalter 6 senkrecht am Werkstück 25 aufliegt. Dadurch ist ein Strahlenschutz ohne zusätzliche Strahlenschutzkabine gewährleistet.

Die Temperatur am Werkstück wird vorzugsweise durch das Pyrometer 24 gemessen (s. Fig. 6). Das Pyrometer 24 ist am Niederhalter 6 angeordnet, wobei eine Bohrung 39 am Niederhalter 6 ausgebildet ist. Bevorzugterweise ist eine Längserstreckung der Bohrung 39 quer zu den Längserstreckungen der Ausnehmungen 32, 34 und zur Bewegungsachse 35 des bewegbaren Werkzeugs 7 ausgerichtet. Somit blockiert das Pyrometer 24 nicht die Lichtstrahlung entlang des Lichtleitungssystems 9 oder die Bewegung des bewegbaren Werkzeugs 7. Zum Beispiel ist die Bohrung 39 relativ zur ersten Ausnehmung 32 um 90° um die Bewegungsachse 35 gedreht am Niederhalter 6 vorhanden. Hierdurch kann eine Wärmestrahlung des Werkstücks über die Bohrung 39 das Pyrometer 24 erreichen, womit eine Temperatur des Werkstücks 25, insbesondere eine Temperatur des Werkstücks 25 an der Fügestelle des Werkstücks ermittelt werden kann. Das Pyrometer 24 kommuniziert bevorzugterweise die gemessene Temperatur an die Kontrolleinheit 40, wobei in der Kontrolleinheit 40 die zu erreichende Temperatur gespeichert ist und mit dem Messwert verglichen wird. Die Kontrolleinheit 40 hat beispielsweise zu erreichende Temperaturen für unterschiedliche Materialien gespeichert. Wird die zu erreichende Temperatur beispielsweise nicht vor einer bestimmten Zeitdauer erreicht, wird die Lichtquelle 10 deaktiviert. Kann die zu erreichende Temperatur nicht in der bestimmten Zeitdauer erreicht werden, wird der Fügevorgang erst einmal abgebrochen.

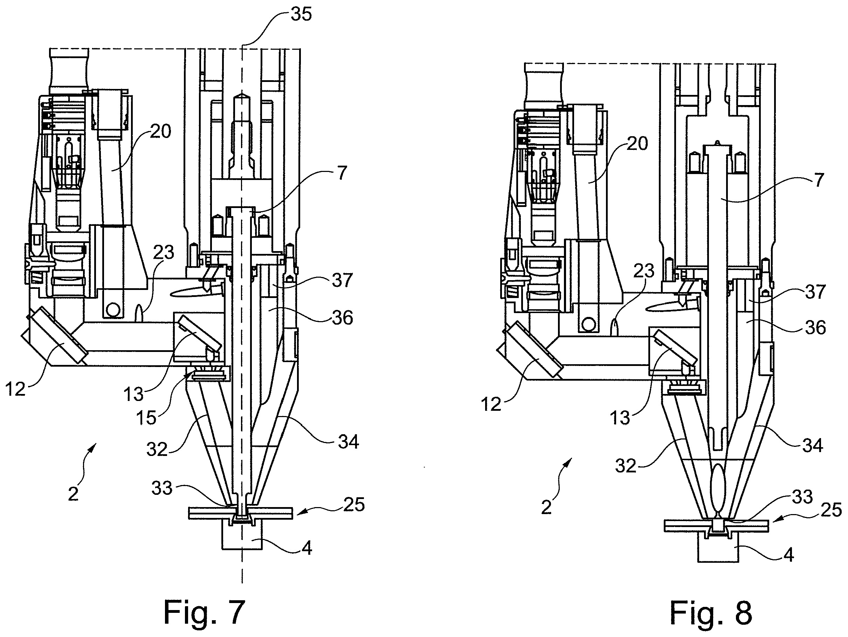

Beispielsweise wird insbesondere unmittelbar vor dem Ausschalten der Lichtquelle 10 oder zeitgleich mit dem Ausschalten der Lichtquelle 10 oder nach dem Ausschalten der Lichtquelle 10 eine Bewegung des bewegbaren Werkzeugs 7 in Richtung Werkzeuggegenelement 4 gestartet, so dass das Werkstück 25 an der Fügestelle gefügt wird (s. Fig. 7). Beispielsweise ist die Kontrolleinheit 40 dazu ausgebildet, zu Prüfen, ob die Lichtquelle 10 und damit eine Beleuchtung des Werkstücks 25 ausgeschaltet ist, wenn das bewegbare Werkzeug 7 einen Bereich des Strahlungswegs der Lichtstrahlen der Lichtquelle 10 auf seinem Weg in Richtung Werkzeuggegenelement 4 erreicht. Hierdurch soll verhindert werden, dass das bewegbare Werkzeug 7 durch Bestrahlung mit Lichtstrahlen der Lichtquelle 10 sich ungewollt erhitzt. Ebenfalls soll hierdurch eine Sicherheit eines Mitarbeiters an der Fügewerkzeugeinheit 2 gewährleistet werden. Vorstellbar ist jedoch auch, dass die Kontrolleinheit zunächst prüft, ob die Lichtquelle 10 und damit eine Beleuchtung des Werkstücks 25 ausgeschaltet ist und erst nach der Überprüfung der ausgeschalteten Lichtquelle 10 eine Bewegung des bewegbare Werkzeugs 7 aktiviert. Das bewegbare Werkzeug 7 wird vorzugsweise entlang der Bewegungsachse 35 auf das Werkstück 25 bewegt, wobei durch das Auftreffen des bewegbaren Werkzeugs 7 auf das erste Werkstückteil des Werkstücks 25 die beiden Werkstückteile des Werkstücks 25 verformt werden, indem vorzugsweise die Werkstückteile des Werkstücks 25 gegen das Werkstückgegenelement 4 gedrückt werden. Dabei wird eine Fügeverbindung hergestellt. Beispielsweise ist während der Herstellung der Fügeverbindung insbesondere dauerhaft eine Strömung im Strömungskanal 38 vorhanden, so dass Verschmutzungen, welche beim Herstellen der Fügeverbindung entstehen, abtransportiert werden können (s. Fig. 5).

Beispielsweise wird das bewegbare Werkzeug 7 nach Beendigung des Fügevorgangs in eine Ausgangsposition gemäß Fig. 4 zurück bewegt. Zum Beispiel wird anschließend der zweite Auslass 37 geschlossen. Beispielsweise wird anschließend die Fügewerkzeugeinheit 2, insbesondere der Niederhalter 6 durch den Antrieb 8 vom Werkstück 25 wegbewegt. Beispielsweise strömt dauerhaft Fluid durch den Einlass 23 in Richtung des ersten Auslasses 33, damit die Optiken nicht verunreinigt werden, auch während der Stillstandzeit.

### Bezugszeichenliste

- 1: Werkzeugzange
- 2: Fügewerkzeugeinheit
- 3: Werkzeugbügel
- 4: Werkzeuggegenelement
- 5: Verbindungselement
- 6: Niederhalter
- 7: Werkzeug
- 8: Antrieb
- 9: Lichtleitungssystem
- 10: Lichtquelle
- 11: Kollimator
- 12: Spiegel
- 13: Spiegel
- 14: Strahlensumpf
- 15: Schutzglas
- 16: Steckplatz
- 17: Steckplatz
- 18: Steckplatz
- 19: Steckplatz
- 20: Absaugleitung
- 21: Steckplatz
- 22: Steckplatz
- 23: Einlass
- 24: Pyrometer
- 25: Werkstück
- 26: Verstellelement
- 27: Befestigungselement
- 28: Sicherungsschalter
- 29: Anbindungselement
- 30: Befestigungsmittel
- 31: Kühlplatte
- 32: Ausnehmung
- 33: Auslass
- 34: Ausnehmung
- 35: Bewegungsachse
- 36: Aussparung
- 37: Auslass
- 38: Strömungskanal
- 39: Bohrung
- 40: Kontrolleinheit
- 41: Bereich
- 42: Werkstückoberfläche

## Patentansprüche

1. Fügewerkzeugeinheit (2) mit einen Niederhalter (6) mit einem bewegbaren Werkzeug (7) und ein Werkzeuggegenelement (4), wobei der Niederhalter (6) mit dem bewegbaren Werkzeug (7) und das Werkzeuggegenelement (4) sich gegenüberliegend vorhanden sind, wobei ein Werkstück (25) im angeordneten Zustand zwischen dem Niederhalter (6) und dem Werkzeuggegenelement (4) positionierbar ist, wobei das bewegbare Werkzeug (7) und das Werkzeuggegenelement (4) zur Ausbildung einer Fügeverbindung zusammenwirken, wobei ein Lichtleitungssystem (9) an dem Niederhalter (6) ausgebildet ist, wobei das Lichtleitungssystem (9) dazu ausgebildet ist, einen Lichtstrahl eines Lichts in Richtung einer Fügestelle des Werkstücks (25) zu leiten, wenn das Werkstück (25) an der Fügewerkzeugeinheit (2) angeordnet ist, wobei entlang einer Strecke des Lichtstrahls des Lichts bis zu einem werkstückseitigen Ende des Niederhalters (6) ein Strömungskanal (38) für ein Fluid definiert ist, wobei der Strömungskanal (38) einen Einlass (23) und einen ersten Auslass (33) aufweist, wobei der erste Auslass (33) für das Fluid an einem werkstückseitigen Ende des Niederhalters (6) ausgebildet ist, welcher in einem Fügevorgang in Kontakt mit dem Werkstück (25) ist **dadurch gekennzeichnet , dass** ein zweiter Auslass (37) des Strömungskanals (38) vorgesehen ist, wobei das bewegbare Werkzeug (7) entlang einer Bewegungsachse der Fügewerkzeugeinheit (2) bewegbar vorhanden ist, wobei das bewegbare Werkzeug (7) entlang einer Bohrung im Niederhalter (6) linear beweglich ist.

2. Fügewerkzeugeinheit nach Anspruch 1, **dadurch gekennzeichnet, dass** das bewegbare Werkzeug (7) ausschließlich linear entlang der Bewegungsachse der Fügewerkzeugeinheit (2) bewegbar vorhanden ist.

3. Fügewerkzeugeinheit nach einem der vorangegangenen Ansprüche, **dadurch gekennzeichnet, dass** am Strömungskanal (38) ein Sensor angeordnet ist.

4. Fügewerkzeugeinheit nach dem vorangegangenen Anspruch 3, **dadurch gekennzeichnet, dass** eine Änderung des Drucks mit dem Sensor messbar ist.

5. Fügewerkzeugeinheit nach einem der vorangegangenen Ansprüche, **dadurch gekennzeichnet, dass** der zweite Auslass (37) absperrbar ist.

6. Fügewerkzeugeinheit nach einem der vorangegangenen Ansprüche, **dadurch gekennzeichnet, dass** das Lichtleitungssystem (9) Optiken (12, 13, 15) umfasst, wobei das Fluid derart durch den Strömungskanal (38) leitbar ist, dass das Fluid die Optiken (12, 13, 15) kühlt und reinigt.

7. Fügewerkzeugeinheit nach einem der vorangegangenen Ansprüche 3 bis 6, **dadurch gekennzeichnet, dass** die Fügewerkzeugeinheit (2) eine Kontrolleinheit (40) umfasst, wobei die Kontrolleinheit (40) Daten des Sensors erfassen kann.

8. Fügewerkzeugeinheit nach einem der vorangegangenen Ansprüche, **dadurch gekennzeichnet, dass** ein vorgegebenen Schwellenwert überschreitbar ist, wenn der erste Auslass (33) abgedeckt und der zweite Auslass (37) gesperrt ist.

9. Fügewerkzeugeinheit nach einem der vorangegangenen Ansprüche 3 bis 8, **dadurch gekennzeichnet, dass** die Kontrolleinheit (40) den Lichtstrahl aktiviert, wenn der Sensor einen vorgegebenen Schwellenwert für den Druck überschreitet.

10. Fügewerkzeugeinheit nach einem der vorangegangenen Ansprüche 3 bis 9, **dadurch gekennzeichnet, dass** die Kontrolleinheit (40) den Lichtstrahl deaktiviert oder nicht freigibt, wenn der Sensor einen vorgegebenen Schwellenwert für den Druck unterschreitet.

11. Werkzeugzange (1) mit einer Fügewerkzeugeinheit (2) nach einem der vorangegangenen Ansprüche und mit einem Werkzeugbügel (3).

12. Fügevorgang eines Werkstücks durch eine Fügewerkzeugeinheit nach einem der vorangegangenen Ansprüche 3 bis 10, mit den nacheinander folgenden Verfahrensschritten:
- Einlassen eines Fluides in einen Strömungskanal (38),
- Bewegen der Fügewerkzeugeinheit (2) in Richtung eines Werkstücks (25), bis ein erster Auslass (33) eines Niederhalters (6) auf dem Werkstück (25) aufliegt,
- Sperren eines zweiten Auslasses (37) des Niederhalters (6),
- Messen eines Drucks durch einen Sensor im Strömungskanal (38),
- Vergleichen des durch den Sensor gemessenen Drucks mit einem vorgebbaren Schwellenwert für den Druck durch eine Kontrolleinheit (40),
- Öffnen des zweiten Auslasses (37) und Herstellung einer Strömung im Strömungskanal (38), wenn der vorgegebene Schwellenwert von dem mit dem Sensor gemessenen Druck überschritten wird,
- Aktivieren einer Lichtquelle (10) durch die Kontrolleinheit (40),
- Beenden der Bestrahlung der Fügestelle des Werkstücks (25) zeitgleich mit dem Start der Bewegung des bewegbaren Werkzeugs (7) der Fügewerkzeugeinheit (2) in Richtung des Werkstücks (25) oder zeitlich nach dem Start der Bewegung des bewegbaren Werkzeugs (7) der Fügewerkzeugeinheit (2) in Richtung des Werkstücks (25),
- Absperren des zweiten Auslasses (37) durch die Kontrolleinheit (40),
- Wegbewegen der Fügewerkzeugeinheit (2) bzw. Niederhalters (6) vom Werkstück (25).

## Claims

1. Joining tool unit (2) comprising a hold-down device (6) with a movable tool (7) and a tool counter element (4), wherein the hold-down device (6) with the movable tool (7) and the tool counter element (4) are provided opposite each other, wherein a workpiece (25) can be positioned between the hold-down device (6) and the tool counter element (4) in the arranged state, wherein the movable tool (7) and the tool counter element (4) cooperate to form a joint connection, wherein a light guiding system (9) is formed on the hold-down device (6), wherein the light guiding system (9) is designed to conduct a light beam of a light in the direction of a joint location of the workpiece (25) when the workpiece (25) is arranged on the joining tool unit (2), wherein a flow channel (38) for a fluid is defined along a section of the light beam of the light to a workpiece-side end of the hold-down device (6), wherein the flow channel (38) has an inlet (23) and a first outlet (33), wherein the first outlet (33) for the fluid is formed on a workpiece-side end of the hold-down device (6), said first outlet being in contact with the workpiece (25) during a joining process, **characterized in that** a second outlet (37) of the flow channel (38) is provided, wherein the movable tool (7) is provided to be movable along a movement axis of the joining tool unit (2), wherein the movable tool (7) is movable in a linear manner along a bore in the hold-down device (6).

2. Joining tool unit according to Claim 1, **characterized in that** the movable tool (7) is provided to be movable only in a linear manner along the movement axis of the joining tool unit (2).

3. Joining tool unit according to one of the preceding claims, **characterized in that** a sensor is arranged on the flow channel (38).

4. Joining tool unit according to the preceding Claim 3, **characterized in that** a change in pressure can be measured by the sensor.

5. Joining tool unit according to one of the preceding claims, **characterized in that** the second outlet (37) can be shut off.

6. Joining tool unit according to one of the preceding claims, **characterized in that** the light guiding system (9) comprises optics (12, 13, 15), wherein the fluid can be conducted through the flow channel (38) such that the fluid cools and cleans the optics (12, 13, 15).

7. Joining tool unit according to one of the preceding Claims 3 to 6, **characterized in that** the joining tool unit (2) comprises a control unit (40), wherein the control unit (40) can detect data of the sensor.

8. Joining tool unit according to one of the preceding claims, **characterized in that** a predetermined threshold value can be exceeded when the first outlet (33) is covered and the second outlet (37) is blocked.

9. Joining tool unit according to one of the preceding Claims 3 to 8, **characterized in that** the control unit (40) activates the light beam when the sensor exceeds a predetermined threshold value for the pressure.

10. Joining tool unit according to one of the preceding Claims 3 to 9, **characterized in that** the control unit (40) deactivates or does not release the light beam when the sensor falls below a predetermined threshold value for the pressure.

11. Tool gripper (1) comprising a joining tool unit (2) according to one of the preceding claims and comprising a tool clip (3).

12. Process for joining a workpiece by means of a joining tool unit according to one of the preceding Claims 3 to 10, having the successive method steps:
- admitting a fluid into a flow channel (38),
- moving the joining tool unit (2) in the direction of a workpiece (25) until a first outlet (33) of a hold-down device (6) is positioned on the workpiece (25),
- blocking a second outlet (37) of the hold-down device (6),
- measuring a pressure by means of a sensor in the flow channel (38),
- comparing the pressure measured by the sensor with a predeterminable threshold value for the pressure by means of a control unit (40),
- opening the second outlet (37) and producing a flow in the flow channel (38) when the predetermined threshold value is exceeded by the pressure measured by the sensor,
- activating a light source (10) by means of the control unit (40),
- terminating the irradiation of the joint location of the workpiece (25) at the same time as the start of the movement of the movable tool (7) of the joining tool unit (2) in the direction of the workpiece (25), or after the start of the movement of the movable tool (7) of the joining tool unit (2) in the direction of the workpiece (25),
- shutting off the second outlet (37) by means of the control unit (40),
- moving the joining tool unit (2) or hold-down device (6) away from the workpiece (25).

## Revendications

1. Unité d'outil d'assemblage (2) comprenant un serre-flan (6) avec un outil mobile (7) et un élément complémentaire d'outil (4), le serre-flan (6) avec l'outil mobile (7) et l'élément complémentaire d'outil (4) étant disposés l'un en face de l'autre, une pièce ouvrée (25) pouvant être positionnée entre le serre-flan (6) et l'élément complémentaire d'outil (4) à l'état monté, l'outil mobile (7) et l'élément complémentaire d'outil (4) coopérant pour former une liaison d'assemblage, un système de guidage de lumière (9) étant formé au niveau du serre-flan (6), le système de guidage de lumière (9) étant configuré pour guider un faisceau lumineux d'une source de lumière en direction d'un point d'assemblage de la pièce ouvrée (25), lorsque la pièce ouvrée (25) est disposée au niveau de l'unité d'outil d'assemblage (2), un canal d'écoulement (38) pour un fluide étant défini le long d'un trajet du faisceau lumineux de la source de lumière jusqu'à une extrémité côté pièce ouvrée du serre-flan (6), le canal d'écoulement (38) possédant une entrée (23) et une première sortie (33), la première sortie (33) pour le fluide étant formée à une extrémité côté pièce ouvrée du serre-flan (6), laquelle est en contact avec la pièce ouvrée (25) dans une opération d'assemblage, **caractérisée en ce qu'**une deuxième sortie (37) du canal d'écoulement (38) est prévue, l'outil mobile (7) étant présent avec mobilité le long d'un axe de déplacement de l'unité d'outil d'assemblage (2), l'outil mobile (7) étant mobile linéairement le long d'un alésage du serre-flan (6).

2. Unité d'outil d'assemblage selon la revendication 1, **caractérisée en ce que** l'outil mobile (7) est présent avec mobilité exclusivement linéairement le long de l'axe de déplacement de l'unité d'outil d'assemblage (2).

3. Unité d'outil d'assemblage selon l'une des revendications précédentes, **caractérisée en ce qu'**un capteur est disposé au niveau du canal d'écoulement (38).

4. Unité d'outil d'assemblage selon la revendication 3, **caractérisée en ce qu'**une variation de la pression peut être mesurée avec le capteur.

5. Unité d'outil d'assemblage selon l'une des revendications précédentes, **caractérisée en ce que** la deuxième sortie (37) peut être fermée.

6. Unité d'outil d'assemblage selon l'une des revendications précédentes, **caractérisée en ce que** le système de guidage de lumière (9) comprend des optiques (12, 13, 15), le fluide pouvant être conduit à travers le canal d'écoulement (38) de telle sorte que le fluide refroidit et nettoie les optiques (12, 13, 15).

7. Unité d'outil d'assemblage selon l'une des revendications précédentes 3 à 6, **caractérisée en ce que** l'unité d'outil d'assemblage (2) comprend une unité de contrôle (40), l'unité de contrôle (40) pouvant acquérir des données du capteur.

8. Unité d'outil d'assemblage selon l'une des revendications précédentes, **caractérisée en ce qu'**une valeur de seuil prédéfinie peut être dépassée lorsque la première sortie (33) est recouverte et que la deuxième sortie (37) est fermée.

9. Unité d'outil d'assemblage selon l'une des revendications précédentes 3 à 8, **caractérisée en ce que** l'unité de contrôle (40) active le rayon lumineux lorsque le capteur dépasse une valeur de seuil prédéfinie pour la pression.

10. Unité d'outil d'assemblage selon l'une des revendications précédentes 3 à 9, **caractérisée en ce que** l'unité de contrôle (40) désactive ou ne libère pas le faisceau lumineux lorsque le capteur franchit vers le bas une valeur de seuil prédéfinie pour la pression.

11. Pince pour outil (1) comprenant une unité d'outil d'assemblage (2) selon l'une des revendications précédentes et comprenant un étrier d'outil (3).

12. Opération d'assemblage d'une pièce ouvrée par une unité d'outil d'assemblage selon l'une des revendications précédentes 3 à 10, comprenant les étapes de procédé successives ci-après :
- introduction d'un fluide dans un canal d'écoulement (38),
- déplacement de l'unité d'outil d'assemblage (2) en direction d'une pièce ouvrée (25) jusqu'à ce qu'une première sortie (33) d'un serre-flan (6) repose sur la pièce ouvrée (25),
- fermeture d'une deuxième sortie (37) du serre-flan (6),
- mesure d'une pression par un capteur dans le canal d'écoulement (38),
- comparaison de la pression mesurée par le capteur avec une valeur de seuil prédéfinissable de la pression par une unité de contrôle (40),
- ouverture de la deuxième sortie (37) et production d'un écoulement dans le canal d'écoulement (38) lorsque la valeur seuil prédéfinie est dépassée par la pression mesurée par le capteur,
- activation d'une source de lumière (10) par l'unité de contrôle (40),
- arrêt de l'irradiation du point d'assemblage de la pièce ouvrée (25) simultanément avec le début du mouvement de l'outil mobile (7) de l'unité d'outil d'assemblage (2) en direction de la pièce ouvrée (25) ou temporellement après le début du mouvement de l'outil mobile (7) de l'unité d'outil d'assemblage (2) en direction de la pièce ouvrée (25),
- fermeture de la deuxième sortie (37) par l'unité de contrôle (40),
- éloignement de l'unité d'outil d'assemblage (2) ou du serre-flan (6) de la pièce ouvrée (25).
